# EUROPEAN PATENT APPLICATION

(11) **EP 4 807 808 A1**
(43) Date of publication of application: **16.09.2026**
(21) Application number: 26164510.5
(22) Date of filing: 13.03.2026
(51) Int. Cl.: H01M 4/525, C01B 32/158, H01M 4/62, H01M 10/0525

(54) **CONDUCTIVE MATERIAL DISPERSION, POSITIVE ELECTRODE MANUFACTURED USING THE SAME, AND RECHARGEABLE LITHIUM BATTERY INCLUDING THE POSITIVE ELECTRODE**

(30) Priority: 13.03.2025 KR 20250032725
(71) Applicant: SAMSUNG SDI CO., LTD., Yongin-si, Gyeonggi-do 17084 (KR)
(72) Inventor: HWANG, Ki Wook, Suwon-si, Gyeonggi-do 16678 (KR); HWANG, Geun Mo, Suwon-si, Gyeonggi-do 16678 (KR); KIM, Seong Jong, Suwon-si, Gyeonggi-do 16678 (KR); KIM, Seung Han, Suwon-si, Gyeonggi-do 16678 (KR); HONG, Seung Yeon, Suwon-si, Gyeonggi-do 16678 (KR); PARK, Min Su, Suwon-si, Gyeonggi-do 16678 (KR); SHIN, Dong Il, Suwon-si, Gyeonggi-do 16678 (KR)
(74) Representative: Michalski Hüttermann & Partner mbB

(57) **Abstract**

A conductive material dispersion for a rechargeable lithium battery, a positive electrode for a rechargeable lithium battery, and a rechargeable lithium battery are disclosed. A conductive material dispersion for a rechargeable lithium battery includes a conductive material and a dispersant, and the conductive material includes carbon nanotubes having an average diameter of 4 nm or more and 15 nm or less and an average specific surface area of 200 m²/g or more and 800 m²/g or less, the dispersant includes hydrogenated nitrile butadiene rubber having a weight average molecular weight of 200,000 to 500,000 g/mol, and the dispersion satisfies Equation 1 herein.

## Description

### CROSS-REFERENCE TO RELATED APPLICATION

The present application claims priority to and the benefit of Korean Patent Application No.10-2025-0032725, filed on March 13, 2025 in the Korean Intellectual Property Office.

### BACKGROUND

### 1. Field

Aspects of embodiments of the present disclosure relate to a conductive material dispersion for a rechargeable lithium battery, a positive electrode manufactured using the same, and a rechargeable lithium battery including the positive electrode.

### 2. Description of the Related Art

Recently, with the rapid spread of electronic devices, such as mobile phones, notebook computers, and electric vehicles, using batteries, the demand for secondary batteries having high energy density and high capacity is rapidly increasing. Therefore, research and development for improving the performance of rechargeable lithium batteries is actively being conducted.

A rechargeable lithium battery is a battery including a positive electrode and a negative electrode that contain an active material capable of intercalation and deintercalation of lithium ions and produces electric energy by oxidation and reduction reactions when the lithium ions are intercalated into and deintercalated from the positive electrode and the negative electrode.

The positive electrode and/or the negative electrode may include carbon nanotubes, which have better conductivity than carbon black, for facilitating movement of electrons. Carbon nanotubes are generally synthesized in a bundle form consisting of a plurality of bundles clumped together. It may be desirable that the carbon nanotubes are dispersed and blended into the slurry as a dispersion prior to being mixed with the positive or negative electrode slurry.

As the performance of rechargeable lithium batteries becomes increasingly advanced, reducing resistance at the positive and negative electrodes is important. Among carbon nanotubes, the use of carbon nanotubes, which enable effective electron movement, is increasing due to a short diameter and large specific surface area thereof. However, as the diameter of the carbon nanotubes becomes shorter and the specific surface area becomes larger, a cohesive force between carbon nanotubes of the same mass increases significantly.

Therefore, it may be desirable to uniformly disperse carbon nanotubes having a short diameter and a large specific surface area.

### SUMMARY

According to an aspect of one or more embodiments of the present disclosure, a carbon nanotube dispersion for a rechargeable lithium battery, which improves dispersibility of carbon nanotubes having a short diameter and a large specific surface area, is provided.

According to another aspect of one or more embodiments of the present disclosure, a conductive material dispersion for a rechargeable lithium battery is provided.

According to one or more embodiments of the present disclosure, a conductive material dispersion for a rechargeable lithium battery includes a conductive material and a dispersant, wherein the conductive material includes carbon nanotubes having an average diameter of 4 nm or more and 15 nm or less and an average specific surface area of 200 m²/g or more and 800 m²/g or less, the dispersant includes hydrogenated nitrile butadiene rubber having a weight average molecular weight of 200,000 to 500,000 g/mol, and the dispersion satisfies the following Equation 1: $0.7 \leq S \times 2 / R \leq 1 ,$ where, in Equation 1, when an AC(alternating current) voltage is applied to the carbon nanotube dispersion and the AC resistance and reactance are measured while increasing a frequency from 0 Hz, the reactance first increases and first decreases first and then second increases and second decreases, and an AC resistance value when the reactance is at a minimum value of the first decrease and the second increase is defined as R (units: Ω), and a reactance value when the reactance is at a maximum value of the second increase and the second decrease is defined as S (units: Ω).

According to one or more embodiments of the present disclosure, a positive electrode for a rechargeable lithium battery is provided.

The positive electrode for a rechargeable lithium battery includes a positive electrode active material layer manufactured using the carbon nanotube dispersion for a rechargeable lithium battery.

According to one or more embodiments of the present disclosure, a rechargeable lithium battery is provided.

The rechargeable lithium battery includes a positive electrode and a negative electrode for the rechargeable lithium battery.

### BRIEF DESCRIPTION OF THE DRAWINGS

The above and other objects, features, and advantages of the present disclosure will become more apparent to those of ordinary skill in the art by describing some embodiments thereof in further detail with reference to the accompanying drawings, in which:
FIG. 1 is a graph illustrating Equation 1 in the present specification;
FIG. 2 is a graph showing a first increase and a first decrease in reactance with increasing frequency when deriving Equation 1;
FIG. 3 is a graph showing a second increase and a second decrease in reactance with increasing frequency when deriving Equation 1;
FIGS. 4 to 7 are views schematically showing rechargeable lithium batteries according to some embodiments; and
FIG. 8 shows results of AC resistance (X-axis, units: Ω) and reactance (Y-axis, units: Ω) for carbon nanotube dispersions of some examples and comparative examples, wherein in FIG. 8, the solid line represents Example 2, the single-dot dashed line represents Comparative Example 2, and the double-dot dashed line represents Comparative Example 3.

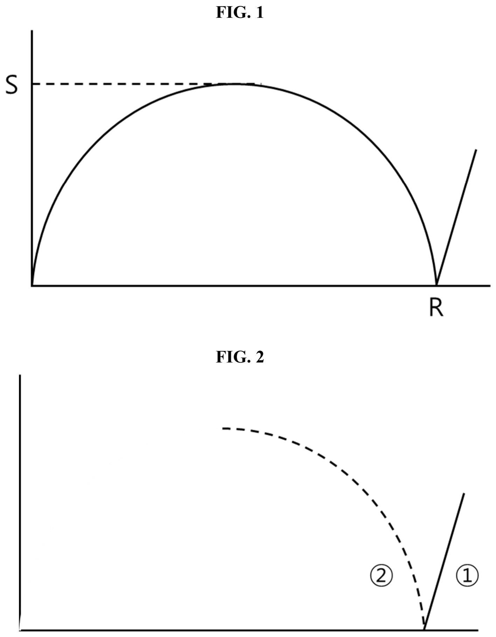

In FIGS. 1 to 3 and FIG. 8, the X-axis represents AC resistance and the Y-axis represents reactance.

### DETAILED DESCRIPTION

Herein, some embodiments of the present invention will be described in further detail. However, the embodiments are presented as examples, and the present invention is not limited thereto but, rather, is to be defined by the scope of the claims.

Unless otherwise specified herein, when a part, such as a layer, a film, an area, a plate, etc., is said to be "on" another part, this includes not only a case in which the part is "directly on" the other part, but also a case in which one or more other parts are present therebetween.

Unless otherwise specified herein, the singular may also include the plural. In addition, unless otherwise specified, "A or B" may mean "including A," "including B," or "including A and B."

In this specification, "a combination thereof" may mean any of a mixture, a laminate, a composite, a copolymer, an alloy, a blend, and a reaction product of the components.

A conductive material dispersion for a rechargeable lithium battery according to one or more embodiments can provide a rechargeable lithium battery with low resistance and improved conductivity by lowering the powder resistance of a positive electrode powder of the rechargeable lithium battery. The powder resistance is measured for the powder for a positive electrode active material layer, and the lower the powder resistance, the higher the conductivity of the powder for a positive electrode active material layer.

In an embodiment, the dispersion includes a conductive material and a dispersant, wherein the conductive material includes carbon nanotubes having an average diameter of 4 nm or more and 15 nm or less and an average specific surface area of 200 m²/g or more and 800 m²/g or less, the dispersant includes hydrogenated nitrile butadiene rubber having a weight average molecular weight of 200,000 to 500,000 g/mol, and the dispersion satisfies the following Equation 1: $0.7 \leq S \times 2 / R \leq 1 ,$ where, in Equation 1, when an AC(alternating current) voltage is applied to the carbon nanotube dispersion and the AC resistance and reactance are measured while increasing a frequency from 0 Hz, the reactance first increases and first decreases first and then second increases and second decreases, and an AC resistance value when the reactance is at a minimum value of the first decrease and the second increase is defined as R (units: Ω), and a reactance value when the reactance is at a maximum value of the second increase and the second decrease is defined as S (units: Ω).

### Description of Equation 1

Equation 1 serves as a criterion for determining whether a powder for a positive electrode active material layer manufactured using a dispersion including carbon nanotubes having an average diameter of 4 nm or more and 15 nm or less and an average specific surface area of 200 m²/g or more and 800 m²/g or less has low powder resistance and thus may provide excellent conductivity. The dispersion including the carbon nanotubes and satisfying Equation 1 has excellent dispersibility of the carbon nanotubes in the dispersion, and, since the carbon nanotubes do not re-agglomerate into bundle forms after being dispersed, excellent conductivity can be achieved.

According to an embodiment, S x 2 / R in Equation 1 may be 0.7 to 0.95, for example, 0.7, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.7 to 0.9, or 0.7 to 0.85. In the above ranges, the dispersion may be readily prepared, and conductivity thereof may be further improved.

In an embodiment, in Equation 1, R may be 10 kΩ to 1,000 kΩ, for example, 20 kΩ to 800 kΩ.

In an embodiment, in Equation 1, S may be 5 kΩ to 500 kΩ, for example, 10 kΩ to 400 kΩ.

Equation 1 may be obtained from the graph between AC resistance and reactance. The graph may be obtained for the dispersion by the following procedure.

For example, an AC voltage is applied to 2 to 5 ml of the dispersion, and the AC resistance and reactance are measured while increasing a frequency from 0 Hz.

The AC resistance and reactance may be measured using an inductance capacitance resistance (LCR) meter.

At this time, the AC voltage may be 10 mV to 5 V.

At this time, the AC resistance and reactance may be measured while increasing the frequency from 0 Hz to 10 MHz.

The measurement shows that when the frequency is increased from 0 Hz, the reactance first increases and first decreases, and then second increases and second decreases. At this time, when the reactance first decreases and second increases, the reactance becomes a minimum value, and the AC resistance when the reactance is a minimum value is defined as R. The AC resistance when the reactance second increases and second decreases and reaches its maximum value is defined as S.

FIG. 1 shows the relationship between AC resistance and reactance when obtaining Equation 1 in the present specification.

Referring to FIG. 1, the X-axis represents AC resistance, and the Y-axis represents reactance. In the resulting graph of reactance vs. AC resistance, the AC resistance when reactance is at its minimum value is denoted as R, and the reactance value when reactance is at its maximum value is denoted as S.

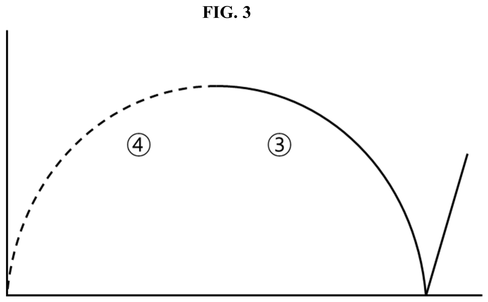

FIGS. 2 and 3 sequentially show the results of the AC resistance and reactance while increasing the frequency when obtaining Equation 1.

Referring to FIG. 2, when the frequency is increased from 0 Hz, the reactance first decreases first (indicated by ①) and first increases (indicated by ②). Referring to FIG. 3, when the frequency is continuously increased, the reactance second increases (indicated by ③) and second decreases (indicated by ④).

The dispersion includes carbon nanotubes having an average diameter of 4 nm or more and 15 nm or less and an average specific surface area of 200 m²/g or more and 800 m²/g or less.

The "diameter" means a value obtained by measuring the diameter of the carbon nanotube if the cross-section of the carbon nanotube is circular, and means the longest length in the cross-section of the carbon nanotube if the cross-section of the carbon nanotube is not circular. The diameter may be measured by SEM image.

The "average diameter" is an average value of the diameters measured for carbon nanotubes in the dispersion.

The "specific surface area" refers to the BET specific surface area. The BET specific surface area may be measured by using physical adsorption and chemical adsorption phenomena of nitrogen gas and a Brunauer-Emmett-Teller (BET) method using a Macsorb HM Model-1208 (MOUNTECH).

The "average specific surface area" is an average value of the specific surface areas measured for carbon nanotubes in the dispersion.

The carbon nanotube having an average diameter of 4 nm or more and 15 nm or less and an average specific surface area of 200 m²/g or more and 800 m²/g or less can further enhance the effect of improving conductivity and reducing resistance when the dispersion satisfies Equation 1.

According to an embodiment, the average diameter may be 4, 4.5, 5, 5.5, 6, 6.5, 7, 7.5, 8, 8.5, 9, 9.5, 10, 10.5, 11, 11.5, 12, 12.5, 13, 13.5, 14, 14.5, or 15 nm, or 4.5 to 14 nm.

According to an embodiment, the diameter of the carbon nanotube may be 5 to 13 nm, for example, 5 to 12 nm.

According to an embodiment, the average specific surface area may be 200, 250, 300, 350, 400, 450, 500, 550, 600, 650, 700, 750, or 800 m²/g, or 200 to 750 m²/g, for example, 200 to 700 m²/g.

According to an embodiment, the specific surface area of the carbon nanotube may be 200 to 725 m²/g, for example, 200 to 700 m²/g.

In an embodiment, the carbon nanotube may have an average length of 10 µm or less, and, in an embodiment, 0.1 µm to 10 µm. When the average length of the carbon nanotube is within the above range, the electrolyte impregnability of an electrode manufactured using this carbon nanotube dispersion and ion mobility in a battery can be further improved while exhibiting appropriate conductivity.

In the dispersion according to an embodiment, carbon nanotubes are included as a conductive material, and, in an embodiment, the content of the carbon nanotubes may be 0.5 to 8.0 wt%, for example, 0.5, 1.0, 1.5, 2.0, 2.5, 3.0, 3.5, 4.0, 4.5, 5.0, 5.5, 6.0, 6.5, 7.0, 7.5, or 8.0 wt%, or 0.4 to 7.0 wt%, for example, 1.0 to 6.0 wt%, for example, 2.0 wt%, based on 100 wt% of the entire dispersion. When the content of the carbon nanotubes is within the above range, a dispersion exhibiting an appropriate viscosity may be obtained, and when a positive electrode is manufactured using this dispersion, a positive electrode exhibiting excellent electrode plate characteristics may be manufactured.

According to an embodiment, the dispersion may have a viscosity of 1,000 to 5,000 cps, for example, 1,500 to 4,500 cps at 25°C.

The carbon nanotubes may be single-walled carbon nanotubes, multi-walled carbon nanotubes, or a combination thereof. According to an embodiment, the carbon nanotubes may be single-walled carbon nanotubes.

According to an embodiment, the carbon nanotubes may be included in the conductive material in an amount of 95 wt% or more, for example, 95 to 100 wt%, or 100 wt%.

The dispersion may include water or one or more solvents as a solvent.

The solvents may include amide-based polar organic solvents, such as dimethylformamide, diethylformamide, dimethylacetamide (DMAc), and N-methylpyrrolidone (NMP); alcohols, such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, and octanol; glycols, such as ethylene glycol, diethylene glycol, triethylene glycol, propylene glycol, 1,3-propanediol, 1,3-butanediol, 1,5-pentanediol, and hexylene glycol; polyhydric alcohols, such as glycerin, trimethylolpropane, pentaerythritol, and sorbitol; glycol ethers, such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether; ketones, such as acetone, methyl ethyl ketone, methyl propyl ketone, and cyclopentanone; and esters, such as ethyl acetate, γ-butyl lactone, and ε-propiolactone; and any one or a mixture of two or more thereof may be used.

According to an embodiment, the dispersion is a non-aqueous dispersion, and the solvent in the dispersion may be an amide-based polar organic solvent, such as N-methyl pyrrolidone (NMP).

The dispersion includes a dispersant, and, in an embodiment, the dispersant includes hydrogenated nitrile butadiene rubber having a weight average molecular weight of 200,000 to 500,000 g/mol. This will be described in further detail below.

### A method of preparing a dispersion satisfying Equation 1

The dispersion may be prepared by a method of adding and dispersing a dispersant described below to a mixture of carbon nanotubes having an average diameter of 4 nm or more and 15 nm or less and an average specific surface area of 200 m²/g or more and 800 m²/g or less and a solvent.

Hydrogenated nitrile butadiene rubber having a weight average molecular weight of 200,000 to 500,000 g/mol is used as the dispersant. When hydrogenated nitrile butadiene rubber having the above weight average molecular weight is used as a dispersant, the dispersion including carbon nanotubes may satisfy Equation 1. The weight average molecular weight may be obtained as a standard polystyrene-converted value by gel permeation chromatography.

A dispersion including hydrogenated nitrile butadiene rubber having a weight average molecular weight of less than 200,000 g/mol as a dispersant may have a problem of precipitation due to re-agglomeration of carbon nanotubes after being dispersed.

A dispersion including hydrogenated nitrile butadiene rubber having a weight average molecular weight of more than 500,000 g/mol as a dispersant may have problems such as insufficient dispersing power and thus insufficient dispersion of CNTs.

In an embodiment, for example, the hydrogenated nitrile butadiene rubber may have a weight average molecular weight of 200,000 to 450,000 g/mol, 200,000 to 400,000 g/mol, or 250,000 to 350,000 g/mol.

The hydrogenated nitrile-butadiene rubber may be prepared by polymerizing a monomer mixture containing acrylonitrile and butadiene and then performing a hydrogenation reaction.

In an embodiment, the hydrogenated nitrile butadiene rubber may be included in an amount of 0.15 to 1 equivalent, for example, 0.15, 0.2, 0.25, 0.3, 0.35, 0.4, 0.45, 0.5, 0.55, 0.6, 0.65, 0.7, 0.75, 0.8m, 0.85, 0.9, 0.95, or 1 equivalents, 0.2 to 0.9 equivalents, or 0.4 to 0.6 equivalents, relative to the carbon nanotube. In the above ranges, the dispersibility of the carbon nanotubes can be improved and unnecessary hydrogenated nitrile butadiene rubber can be avoided. Here, "equivalent" means the content (parts by weight) of the hydrogenated nitrile butadiene rubber included in the pre-dispersion solution with respect to 1 part by weight of carbon nanotubes.

The dispersion contains the hydrogenated nitrile butadiene rubber as a dispersant, and, in an embodiment, the hydrogenated nitrile butadiene rubber may be included in the dispersion in an amount of 0.05 to 8 wt%, for example, 0.05, 0.1, 0.5, 1.0, 1.5, 2.0, 2.5, 3.0, 3.5, 4.0, 4.5, 5.0, 5.5, 6.0, 6.5, 7.0, 7.5, or 8 wt%, or 0.1 to 6 wt%. In the above ranges, the dispersion may satisfy Equation 1.

As a dispersion including hydrogenated nitrile butadiene rubber having a weight average molecular weight of 200,000 to 500,000 g/mol is dispersed by a dispersion method described below, a dispersion satisfying the above Equation 1 may be prepared.

The method may include: mixing the carbon nanotubes, the solvent, and the hydrogenated nitrile butadiene rubber having a weight average molecular weight of 200,000 to 500,000 g/mol to prepare a pre-dispersion solution; and sequentially performing primary dispersion and secondary dispersion of the prepared pre-dispersion solution to prepare the dispersion.

In an embodiment, the primary dispersion may include dispersing the pre-dispersion solution at 5000 to 8000 rpm, for example, 5000 to 7000 rpm, for 60 to 120 minutes.

In an embodiment, the secondary dispersion may be high-pressure dispersion, which includes dispersing the pre-dispersion solution at a dispersion pressure of 700 to 2000 bar, for example, 1000 to 1500 bar.

In an embodiment, the secondary dispersion may include performing the high pressure dispersion for 60 to 120 minutes.

The dispersion may be used in the manufacture of a positive electrode for a rechargeable lithium battery.

### Positive electrode for rechargeable lithium battery

According to an embodiment, the positive electrode for a rechargeable lithium battery includes a positive electrode active material layer, and the positive electrode active material layer is manufactured using the conductive material dispersion for a rechargeable lithium battery. In an embodiment, the positive electrode active material layer may be manufactured using a positive electrode slurry comprising the conductive material dispersion for a rechargeable lithium battery. The positive electrode may provide high conductivity by including the positive electrode active material layer manufactured using the conductive material dispersion for a rechargeable lithium battery.

A positive electrode for a rechargeable lithium battery may include a current collector and a positive electrode active material layer on the current collector. The positive electrode active material layer may include a positive electrode active material and a conductive material, and may further include a binder. For example, the positive electrode may further include an additive that can function as a sacrificial positive electrode.

In an embodiment, Al may be used as the current collector, but the present disclosure is not limited thereto.

The positive electrode slurry includes the conductive material dispersion for a rechargeable lithium battery and the positive electrode active material, and may further include a binder.

The positive electrode active material may include a compound (e.g., a lithiated intercalation compound) that is capable of intercalating and deintercalating lithium. In an embodiment, at least one of a composite oxide of lithium and a metal selected from cobalt, manganese, nickel, and combinations thereof may be used.

The composite oxide may be a lithium transition metal composite oxide. Examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any of the following chemical formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be a lithium nickel-based oxide, and may be a lithium nickel-based oxide of the following Chemical Formula 1:

Chemical Formula 1 Liₐ₁Niₓ₁M¹_{y1}M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, and M1 and M2 are each independently one or more elements selected from the group consisting of Al, B, Ba, Ca, Ce, Co, Cr, Cu, Fe, Mg, Mn, Mo, Nb, Si, Sn, Sr, Ti, V, W, and Zr, and X is one or more elements selected from the group consisting of F, P, and S.

In an embodiment, for example, in the above Chemical Formula 1, M¹ may be Co, and M² may be Mn.

In an embodiment, in the above Chemical Formula 1, 0.6≤x1<1, 0<y1≤0.4, and 0<z1≤0.4, or 0.70≤x1<1, 0<y1≤0.25, and 0<z1≤0.05.

For example, the positive electrode active material may be a high-nickel positive electrode active material in which the nickel content is 80 mol% or more, 85 mol% or more, 90 mol% or more, 91 mol% or more, or 94 mol% or more, and 99 mol% or less, based on 100 mol% of the metal excluding lithium in the lithium-transition metal composite oxide. The high-nickel positive electrode active material can realize high capacity and thus can be applied to high-capacity, high-density lithium secondary batteries.

In an embodiment, the positive electrode active material may be a lithium nickel cobalt aluminum (NCA)-based oxide.

The content of the positive electrode active material may be included in an amount of 90 wt% to 99.5 wt% of 100 wt% based on the solid content of the positive electrode slurry.

The binder may attach the positive electrode active material particles well to each other and also attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

In an embodiment, the content of the binder may be 0.5 to 5 wt% based on the solid content of 100 wt% of the positive electrode slurry.

The conductive material may be derived from the conductive material dispersion for lithium secondary batteries.

In an embodiment, the conductive material may be 0.5 to 5 wt% based on the solid content of 100 wt% of the positive electrode slurry.

### Rechargeable lithium battery

According to an embodiment, the rechargeable lithium battery includes a positive electrode and a negative electrode.

Further description of the positive electrode for the lithium secondary battery is omitted, as it has been described above.

### Negative electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

In an embodiment, for example, the negative electrode active material layer may include about 90 wt% to about 99 wt% of the negative electrode active material, about 0.5 wt% to about 5 wt% of the binder, and about 0 wt% to about 5 wt% of the conductive material.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite, such as non-shaped, sheet-shaped, flake-shaped, sphere-shaped, or fiber-shaped, natural graphite or artificial graphite. The amorphous carbon may be a soft carbon, a hard carbon, a mesophase pitch carbonization product, calcined coke, and the like.

In an embodiment, the lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The binder may attach the negative electrode active material particles well to each other and also attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

If an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. In an embodiment, the alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any suitable material that does not cause a chemical change (e.g., does not cause an undesirable chemical change in the rechargeable lithium battery) and that conducts electrons can be used in the battery. Some non-limiting examples thereof may include a carbon-based material, such as natural graphite, artificial graphite, carbon black, acetylene black, Ketjen black, a carbon fiber, a carbon nanofiber, and a carbon nanotube; a metal-based material including copper, nickel, aluminum, silver, etc. in a form of a metal powder or a metal fiber; a conductive polymer, such as a polyphenylene derivative; or a mixture thereof.

In an embodiment, the negative current collector may include a copper foil, a nickel foil, a stainless steel foil, a titanium foil, a nickel foam, a copper foam, a polymer substrate coated with a conductive metal, or a combination thereof.

The lithium rechargeable battery may further include a separator.

### Separator

Depending on a type of the rechargeable lithium battery, a separator may be present between the positive electrode and the negative electrode. The separator may include any of polyethylene, polypropylene, polyvinylidene fluoride, or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both, or opposite, surfaces of the porous substrate.

The porous substrate may be a polymer film formed of any of a polymer polyolefin, such as polyethylene and polypropylene, polyester, such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

The rechargeable lithium battery may further include an electrolyte solution.

### Electrolyte Solution

The electrolyte solution for a rechargeable lithium battery may include a non-aqueous organic solvent and a lithium salt.

The non-aqueous organic solvent may function as a medium for transmitting ions taking part in the electrochemical reaction of a battery.

In an embodiment, the non-aqueous organic solvent may be a carbonate-based, ester-based, ether-based, ketone-based, or alcohol-based solvent, an aprotic solvent, or a combination thereof.

The carbonate-based solvent may include any of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

The ether-based solvent may include any of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include any of ethanol, isopropyl alcohol, and the like, and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In an embodiment, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into any of cylindrical, prismatic, pouch, or coin-type batteries, and the like depending on a shape thereof.

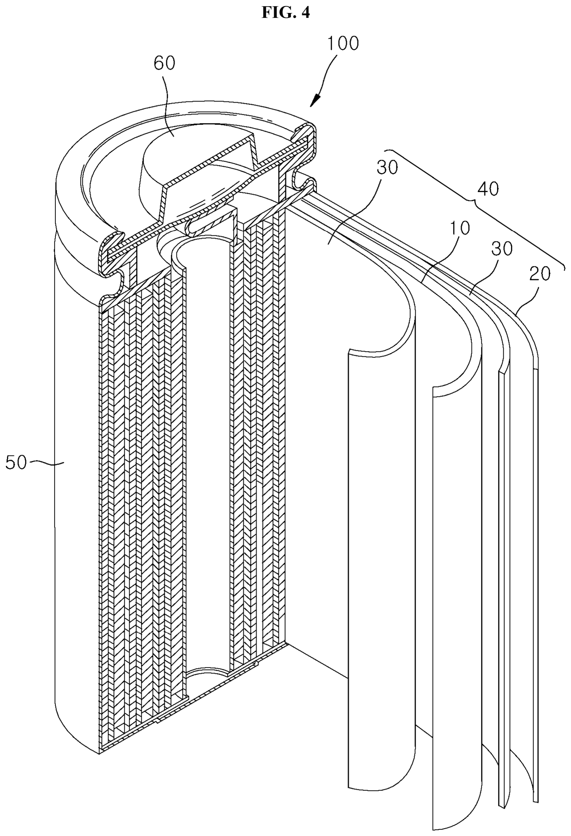

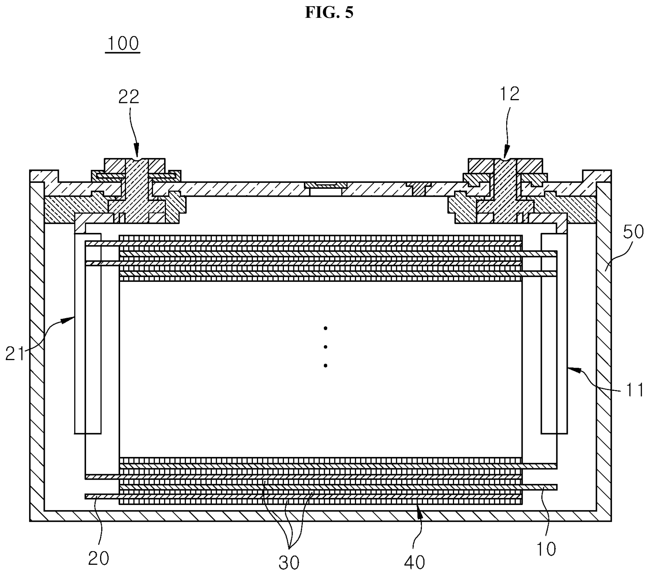

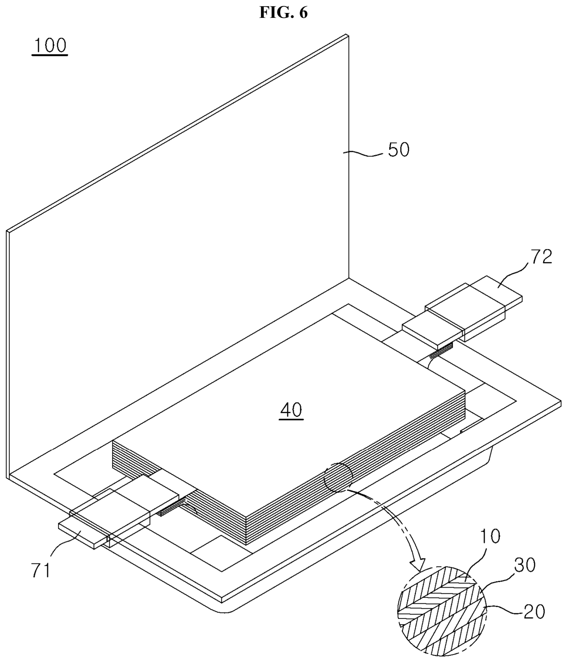

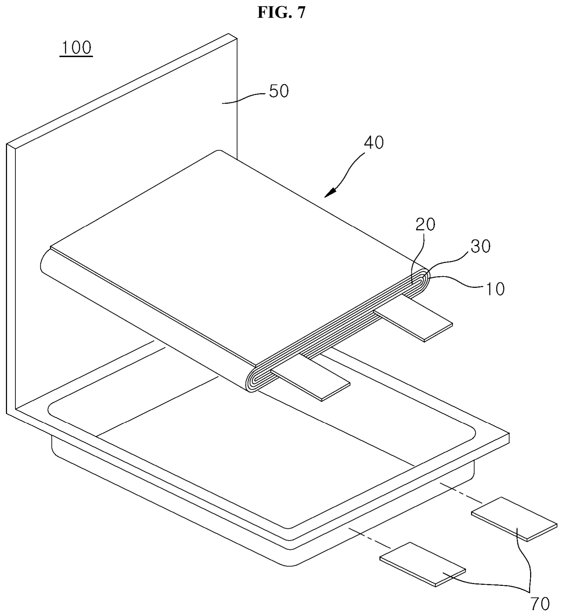

FIGS. 4 to 7 are schematic views illustrating a rechargeable lithium battery according to an embodiment. FIG. 4 shows a cylindrical battery, FIG. 5 shows a prismatic battery, and FIGS. 6 and 7 show pouch-type batteries. Referring to FIGS. 4 to 7, the rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 4. In FIG. 5, the rechargeable lithium battery 100 may include a positive lead tab 11, a positive terminal 12, a negative lead tab 21, and a negative terminal 22. As shown in FIGS. 6 and 7, the rechargeable lithium battery 100 may include an electrode tab 70, which may be, for example, a positive electrode tab 71 and a negative electrode tab 72 to function as an electrical path for inducing the current formed in the electrode assembly 40 to the outside.

The rechargeable lithium battery according to an embodiment may be applied to automobiles, mobile phones, and/or various types of electric devices, as non-limiting examples.

Herein, some Examples and Comparative Examples of the present disclosure will be described. However, the following Examples are only some examples of the present disclosure, and the present disclosure is not limited to the following Examples.

### Example 1

### (1) Preparation of conductive material dispersion

2.0 wt% of single-walled carbon nanotubes (average specific surface area: 689 m²/g, average diameter: 5 nm, and average length: 10 µm) as a conductive material, 1.0 wt% of hydrogenated nitrile butadiene rubber (H-NBR) (weight average molecular weight: 300,000 g/mol, ZEON CORPORATION) as a dispersant, and 97 wt% of N-methyl-2-pyrrolidone as a solvent were added to prepare a pre-dispersion solution.

The pre-dispersion solution was first dispersed at 6000 rpm for 120 minutes using a homogenizer (Silverson Machines Ltd.). The obtained primary dispersion was dispersed in a circulating manner at a dispersion pressure of 1200 bar for 60 minutes using a high-pressure disperser (Bertoli SRL) to prepare a carbon nanotube dispersion.

### (2) Preparation of positive electrode slurry

Using the prepared conductive material dispersion, 98.5 wt% of LiNi_{0.8}Co_{0.1}Mn_{0.1}O₂ as a positive electrode active material based on solid content, 1.0 wt% of a total amount of carbon nanotubes as a conductive material and hydrogenated nitrile butadiene rubber as a dispersant, and 0.5 wt% of polyvinylidene fluoride were mixed, added to N-methyl-2-pyrrolidone, and stirred for 30 minutes to prepare a positive electrode slurry. The prepared positive electrode slurry was applied to aluminum foil, dried at 120 °C for 12 hours, and rolled to manufacture a positive electrode having a positive electrode active material layer.

### Examples 2 and 3

A conductive material dispersion, a positive electrode slurry, and a positive electrode were prepared in the same manner as in Example 1, except that the shape of carbon nanotubes, the weight average molecular weight and content of hydrogenated nitrile butadiene rubber, and the conditions for primary and secondary dispersions were changed as shown in Table 1 below.

### Comparative Examples 1 to 5

A conductive material dispersion, a positive electrode slurry, and a positive electrode were prepared in the same manner as in Example 1, except that the shape of carbon nanotubes, the content of hydrogenated nitrile butadiene rubber, and the conditions for primary and secondary dispersions were changed as shown in Table 1 below.

### Comparative Examples 6 and 7

A conductive material dispersion, a positive electrode slurry, and a positive electrode were prepared in the same manner as in Example 1, except that the weight average molecular weight of hydrogenated nitrile butadiene rubber was changed as shown in Table 1 below.

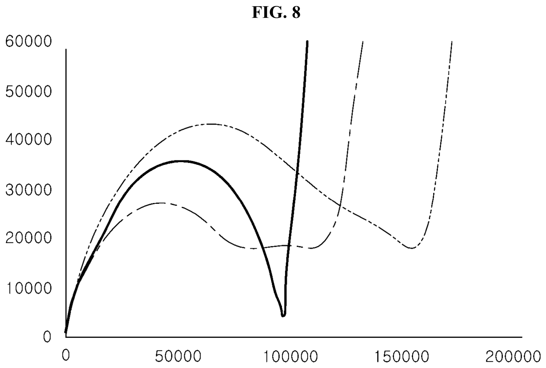

The following physical properties were evaluated for the prepared conductive material dispersion and positive electrode slurry, and the results are shown in Table 1 and FIG. 8.

(1) 2 ml of the dispersion prepared in the Examples and Comparative Examples was placed in a small tube, and an AC voltage (5 V) was applied using an LCR meter (HIOKI E.E. CORPORATION). The AC resistance and reactance of the dispersion were measured while increasing the frequency from 0 Hz.

In the measured AC resistance and reactance, it was confirmed that the reactance increased first and decreased first, and then increased second and decreased second. At this time, an AC resistance value when the reactance is at a minimum value of the first decrease and the second increase is obtained as R (units: Ω), and a reactance value when the reactance is at a maximum value of the second increase and the second decrease is obtained as S (units: Ω), and then the value according to Equation 1 is calculated.

(2) Conductivity: The positive electrode active material layers manufactured in the Examples and Comparative Examples were converted into a powder form to manufacture positive electrode active material layer powder, and the powder resistance of the prepared positive electrode active material layer powder was measured using a powder resistance tester (Dasol Engineering Co., Ltd.) to evaluate a conductivity thereof. If the powder resistance is 15 Ωm or less, it is evaluated as O, and if the powder resistance is more than 15 Ωm, it is evaluated as X.

(3) Measurement of direct current internal resistance (DC-IR) (units: mΩ): 96 wt% of graphite as a negative electrode active material, 2 wt% of Ketjen black as a conductive material, and 2 wt% of styrene butadiene rubber were mixed in distilled water to prepare a negative electrode slurry, and the slurry was coated on a copper foil, dried, and rolled to prepare a negative electrode.

1.5 M LiPF₆ was added to a mixed solvent of ethylene carbonate, ethyl methyl carbonate, and dimethyl carbonate (volume ratio 2:1:7), and 10 wt% of fluoroethylene carbonate, 0.2 wt% of LiBF₄, 1 wt% of lithium bisoxalate borate, 1.5 wt% of LiPO₂F₂, 0.1 wt% of LiSO₃F, and 1 wt% of succinonitrile were added to 100 wt% of this mixture to prepare an electrolyte for a rechargeable lithium battery.

A rechargeable lithium battery was manufactured using the positive electrode, negative electrode, and electrolyte manufactured in the Examples and Comparative Examples. At this time, the amount of electrolyte injected was 5.8 g.

The rechargeable lithium battery was subjected to the formation process twice at 0.2 C, and the voltage drop was recorded while discharging to 50% SOC (state of charge, a state in which the discharge capacity becomes 50% when the total charge capacity of the battery is 100% when charged/discharged at 4.2 V), and the resistance value (mΩ) of the rechargeable lithium battery was calculated using Ohm's Law (V=IR).

**Table 1**

| | Carbon nanotube | | H-NBR | |
|---|---|---|---|---|
| | Average diameter | Average specific surface area | Weight average molecular weight | Content |
| Example 1 | 5 | 689 | 300,000 | 0.5 equivalents |
| Example 2 | 8 | 309 | 300,000 | 0.5 equivalents |
| Example 3 | 11 | 224 | 300,000 | 0.5 equivalents |
| Comparative Example 1 | 5 | 689 | 300,000 | 0.5 equivalents |
| Comparative Example 2 | 8 | 309 | 300,000 | 0.5 equivalents |
| Comparative Example 3 | 8 | 309 | 300,000 | 0.1 equivalent |
| Comparative Example 4 | 11 | 224 | 300,000 | 0.5 equivalents |
| Comparative Example 5 | 16 | 153 | 300,000 | 0.5 equivalents |
| Comparative Example 6 | 5 | 689 | 100,000 | 0.5 equivalents |
| Comparative Example 7 | 5 | 689 | 600,000 | 0.5 equivalents |

**Table 1 continued**

| | Primary dispersion | | Secondary dispersion | | Equation 1 | Conductivity | DC-IR |
|---|---|---|---|---|---|---|---|
| | rpm | Time (minutes) | bar | Time (minutes) | | | |
| Example 1 | 6000 | 120 | 1200 | 60 | 0.74 | O | 22.1 |
| Example 2 | 6000 | 120 | 1200 | 60 | 0.78 | O | 24.2 |
| Example 3 | 6000 | 120 | 1200 | 60 | 0.82 | O | 24.9 |
| Comparative Example 1 | 6000 | 120 | 1200 | 30 | 0.65 | X | 27.7 |
| Comparative Example 2 | 6000 | 120 | 1200 | 30 | 0.66 | X | 28.4 |
| Comparative Example 3 | 6000 | 120 | 1200 | 60 | 0.56 | X | 29.5 |
| Comparative Example 4 | 6000 | 120 | 1200 | 30 | 0.68 | X | 29.2 |
| Comparative Example 5 | 6000 | 120 | 1200 | 60 | 0.81 | X | 28.8 |
| Comparative Example 6 | 6000 | 120 | 1200 | 60 | 0.64 | X | 30.8 |
| Comparative Example 7 | 6000 | 120 | 1200 | 60 | 0.42 | X | 31.4 |

As shown in Table 1 above, the conductive material dispersions of the Examples improve the dispersibility of the conductive material, thereby lowering the powder resistance of the positive electrode powder for the rechargeable lithium battery. This can improve conductivity and achieve low resistance.

However, as shown in Table 1 above, Comparative Examples 5 to 7, which did not satisfy the carbon nanotubes and hydrogenated nitrile butadiene rubber of the present disclosure, had higher powder resistance than the Examples, so that the improvement in conductivity was minimal and resistance was also high. In addition, Comparative Examples 1 to 4, which did not satisfy Equation 1, had higher powder resistance than the Examples, so that the improvement in conductivity was minimal and resistance was also high.

A conductive material dispersion for a rechargeable lithium battery according to one or more embodiments can provide a rechargeable lithium battery with low resistance and improved conductivity by lowering the powder resistance of a positive electrode powder of the rechargeable lithium battery.

Although some embodiments of the present disclosure have been described above, the present disclosure is not limited thereto, and various modifications may be made within the scope of the claims, the detailed description of the disclosure, and the attached drawings, which fall within the scope of the present disclosure.

## Claims

1. A conductive material dispersion for a rechargeable lithium battery (100), the conductive material dispersion comprising:
a conductive material; and
a dispersant,
wherein the conductive material comprises carbon nanotubes having an average diameter of 4 nm or more and 15 nm or less and an average specific surface area of 200 m²/g or more and 800 m²/g or less,
the dispersant comprises hydrogenated nitrile butadiene rubber having a weight average molecular weight of 200,000 to 500,000 g/mol, and
the dispersion satisfies the following Equation 1: $0.7 \leq S \times 2 / R \leq 1 ,$ where, in Equation 1, when an AC voltage is applied to the carbon nanotube dispersion and AC resistance and reactance are measured while increasing a frequency from 0 Hz, the reactance increases and decreases first and then increases and decreases second, and an AC resistance value when the reactance is at a minimum value of the first decrease and the second increase is defined as R (units: Ω), and a reactance value when the reactance is at a maximum value of the second increase and the second decrease is defined as S (units: Ω).

2. The conductive material dispersion as claimed in claim 1, wherein the carbon nanotubes have an average diameter of 4.5 nm to 14 nm and a specific surface area of 200 to 750 m²/g.

3. The conductive material dispersion as claimed in claim 1 or 2, wherein the carbon nanotubes have an average length of 10 µm or less.

4. The conductive material dispersion as claimed in any of the claims 1 to 3, wherein a content of the carbon nanotubes is 0.5 to 8.0 wt% based on a total of 100 wt% of the conductive material dispersion.

5. The conductive material dispersion as claimed in any of the claims 1 to 4, wherein the hydrogenated nitrile butadiene rubber is included in an amount of 0.15 to 1.0 equivalent relative to the carbon nanotubes.

6. The conductive material dispersion as claimed in any of the claims 1 to 5, wherein the hydrogenated nitrile butadiene rubber is included in the dispersion in an amount of 0.05 to 8 wt%.

7. A positive electrode (10) for a rechargeable lithium battery (100), the positive electrode (10) comprising a positive electrode active material layer manufactured using the conductive material dispersion for a rechargeable lithium battery (100) of any of the claims 1 to 6.

8. The positive electrode (10) as claimed in claim 7, wherein the positive electrode active material comprises a lithium nickel-based oxide as the positive electrode active material.

9. The positive electrode (10) as claimed in claim 7 or 8, wherein the lithium nickel-based oxide satisfies the following Chemical Formula 1:
Liₐ₁Niₓ₁M¹_{y1}M²_{z1}O_{2-b1}X_{b1},
where, in Chemical Formula 1, 0.9 ≤ a1 ≤ 1.8, 0.3 ≤ x1 ≤ 1, 0 ≤ y1 ≤ 0.7, 0 ≤ z1 ≤ 0.7, 0.9 ≤ x1+y1+z1 ≤ 1.1, and 0 ≤ b1 ≤ 0.1, M¹ and M² are each independently one or more elements selected from the group consisting of Al, B, Ba, Ca, Ce, Co, Cr, Cu, Fe, Mg, Mn, Mo, Nb, Si, Sn, Sr, Ti, V, W, and Zr, and X is one or more elements selected from the group consisting of F, P, and S.

10. A rechargeable lithium battery (100) comprising the positive electrode (10) for a rechargeable lithium battery (100) as claimed in any of the claims 7 to 9.
